# EUROPEAN PATENT APPLICATION

(11) **EP 4 715 344 A1**
(43) Date of publication of application: **25.03.2026**
(21) Application number: 24201907.3
(22) Date of filing: 23.09.2024
(51) Int. Cl.: G01F 23/296

(54) **A VIBRATING FORK LEVEL SENSOR PROBE ARRANGEMENT**

(71) Applicant: Rosemount Tank Radar AB, 435 23 Mölnlycke (SE)
(72) Inventor: LARSSON, Stig, 433 70 SÄVEDALEN (SE); SÄRNQVIST, Mikael, 435 44 MÖLNLYCKE (SE)
(74) Representative: Kransell & Wennborg KB

(57) **Abstract**

A vibrating fork level sensor probe arrangement (100) for a tank comprising: a first vibrating fork level sensor (102); a second vibrating fork level sensor (104); and a pipe (106) configured to hold the first vibrating fork level sensor in a first position and to hold the second vibrating fork level sensor in a second position at a predetermined distance from the first vibrating fork level sensor, wherein the first and second vibrating fork level sensors are configured to determine a location of an interface of a material in the tank.

## Description

### Field of the Invention

The present invention relates to vibrating fork level sensor probe arrangement. In particular, the present invention is aimed at a probe arrangement comprising a plurality of vibrating fork level sensors.

### Background of the Invention

Level sensors are widely used across various industries, including chemical processing, oil and gas, food and beverage, and water treatment, to monitor and control the amount of material-liquids, solids, or granular substances-contained within tanks, vessels, and other storage units. Among the different types of level sensing technologies available, vibrating fork level sensors are commonly used for their reliability and accuracy in detecting the presence or absence of material at a specific point in the tank.

Vibrating fork sensors typically consist of a pair of tines that oscillate at a certain frequency. When the tines are submerged in a material, the frequency of oscillation changes, allowing the sensor to detect the presence of a material. This technology is especially effective for detecting liquid levels and is valued for its robustness, ease of installation, and minimal maintenance requirements.

### Summary

It is an object of the present invention to provide an improved vibrating fork level sensor probe arrangement.

According to a first aspect of the invention, there is provided a vibrating fork level sensor probe arrangement for a tank comprising: a first vibrating fork level sensor; a second vibrating fork level sensor; and a pipe configured to hold the first vibrating fork level sensor in a first position and to hold the second vibrating fork level sensor in a second position, wherein the first and second vibrating fork level sensors are configured to determine a location of an interface of a material in the tank.

By utilizing a first and second vibrating fork level sensor held at different positions by a single pipe, the described arrangement simplifies installation and reduces overall costs. Traditional systems often require multiple tank penetrations, one for each level that needs to be measured, leading to increased complexity and expense in both installation and maintenance. In contrast, the probe arrangement of the present disclosure requires only a single penetration point, thereby minimizing costs associated with drilling, sealing, and maintaining multiple entry points into the tank.

Furthermore, the arrangement enhances measurement capabilities by allowing for the detection of materials at multiple levels within the tank using just one probe. This makes it possible to measure various levels or detect interfaces between different fluids or materials, all with a single device. The design also provides flexibility in sensor placement, as the pipe can hold the vibrating fork sensors at distinct positions. This flexibility enables precise positioning of the sensors at different heights or locations within the tank, improving the accuracy and resolution of level measurements and allowing for the detection of more complex level profiles.

A further advantage of the described probe arrangement is improved tank integrity and safety. By reducing the number of tank penetrations required, the described invention lowers the risk of leaks or structural weaknesses that could compromise the integrity of the tank. This results in a safer and more durable tank system, which is particularly important in applications involving hazardous or corrosive materials.

Additionally, the probe arrangement is compatible with existing tank designs, enabling easy integration without significant modifications. This makes the invention suitable for retrofitting older tanks, extending their operational life and functionality with minimal additional expense. Moreover, because the arrangement allows for multiple vibrating fork sensors to be placed at different levels, it offers the potential for enhanced media differentiation, such as distinguishing between different types of materials or interfaces, like oil and water. This capability is valuable in applications where accurate media differentiation is crucial for process control or safety monitoring.

According to an example embodiment, the first vibrating fork level sensor is arranged to operate at first frequency and the second vibrating fork level sensor is arranged to operate at second frequency, different from the first frequency. Operating the two sensors at different frequencies allows for independent and simultaneous detection of material levels at different positions within the tank. The use of two different frequencies also reduces the risk of signal interference between the sensors and may thereby enhance the accuracy of detecting multiple levels or interfaces.

According to an example embodiment, the pipe forms a homogeneous tubular channel. A homogeneous tubular channel simplifies the manufacturing process and ensures structural integrity along the entire length of the pipe. This reduces the likelihood of weak points or inconsistencies that could lead to failure or reduced durability. It also ensures consistent sensor positioning, which contributes to more accurate and reliable level detection. Moreover, wiring within the pipe may be simplified.

According to an example embodiment, the pipe is formed in a single piece. A single-piece construction eliminates joints or seams that could serve as potential points of leakage or failure, enhancing the overall robustness and longevity of the probe. The use of a single piece pipe may also minimize manufacturing complexity and reduce cost by avoiding the need for additional assembly steps or sealing measures.

According to an example embodiment, the pipe is a forked pipe comprising a first branch holding the first vibrating fork level sensor and a second branch holding the second vibrating fork level sensor. The forked pipe design for example allows for the positioning of sensors in different spatial orientations within the tank which may increase flexibility in sensor placement and enables detection of material levels at varying angles or locations, accommodating tanks of different shapes or sizes and improving the adaptability of the sensor to specific application requirements. Moreover, a forked pipe enables placement of sensors in locations which may otherwise be difficult to access.

According to an example embodiment, the probe arrangement further comprises a sensor body configured to be arranged at an interface between an inside and an outside of a tank, wherein the pipe is connected to the sensor body. Integrating a sensor body that interfaces with the tank wall provides a stable mounting point and allows for secure attachment of the probe arrangement, facilitating proper alignment and installation while simplifying maintenance and replacement. Using a single sensor body for connecting the probe arrangement to an outside of the tank also helps to maintain the integrity of the tank by minimizing potential leak points.

According to an example embodiment, the sensor body has a first diameter, and where both of the first vibrating fork level sensor and the second vibrating fork level sensor are arranged within said first diameter. By confining the sensor arrangement within a specific diameter, the probe can be installed in tanks with limited or standardized penetration sizes which facilitates compatibility with existing tank fittings and reduces the need for customized installations, making the probe arrangement more versatile and easier to deploy across a range of applications.

According to an example embodiment, the pipe is rotatably connected to the sensor body, allowing rotational adjustment of the pipe in relation to the sensor body. A rotatable connection allows for easy adjustment of the sensor orientation during manufacturing or during installation, thereby enabling selective positioning of the sensors to accommodate varying tank geometries or to fine-tune sensor alignment for maximum sensitivity and accuracy. The rotatable connection may also reduce downtime if adjustments are needed post-installation.

According to an example embodiment, the probe arrangement is configured to be installed horizontally in a tank, and the pipe comprises two parallel branches holding the first and second vibrating fork level sensor such that a vertical distance between the first and second vibrating fork level sensor is controllable by rotation of the pipe in relation to the sensor body. Horizontal installation capability is beneficial in tanks where vertical space is limited or where horizontal measurement is preferred. Moreover, in applications where it is desirable to measure a level near the bottom of a tank, a horizontal installation in a tank wall may be preferable. Furthermore, the ability to control the vertical distance between sensors by rotating the pipe provides greater flexibility in detecting specific levels or interfaces, enhancing the versatility and range of applications for the probe arrangement.

According to an example embodiment, each of the first vibrating fork level sensor and the second vibrating fork level sensor is rotatably connected to the pipe to enable relative rotational alignment of the respective first and second vibrating fork level sensor. Allowing each sensor to be independently rotatable provides an additional level of adjustment, which for example allows both forks to have the same alignment for any rotational position of the pipe, thereby ensuring that each sensor can be optimally positioned for a specific measurement task, improving overall detection accuracy and reliability.

According to an example embodiment, the first vibrating fork level sensor is configured to be arranged at a predefined vertical distance from the second vibrating fork level sensor when the probe arrangement is mounted in a tank. Having a predefined vertical distance between sensors ensures consistent and repeatable measurement positions. It also simplifies installation by providing a standard reference point for sensor placement.

According to an example embodiment, the probe arrangement comprises an alignment mark configured to define a rotational alignment of the probe arrangement when the probe arrangement is arranged horizontally in a tank. An alignment mark simplifies the installation process by providing a clear visual reference for correct sensor orientation, thereby reducing the risk of installation errors, and ensuring that the sensors are positioned as intended.

According to an example embodiment, the first vibrating fork level sensor is connected to a first pipe section and the second vibrating fork level sensor is connected to a second pipe section parallel with the first pipe section, wherein, the first pipe section is longer than the second pipe section, the first pipe section comprises a recessed portion; and the second vibrating fork level sensor is at least partially arranged in the recessed portion of the first pipe section. The described configuration enables compact placement of multiple sensors in close proximity while minimizing the space required within the tank. It allows for efficient use of space in smaller tanks or in applications where minimal intrusion into the tank is desired. Additionally, the recessed portion provides physical protection to the sensor, reducing the risk of damage.

According to an example embodiment, each of the first and second vibrating fork level sensor is connected to a sensor control unit using separate wiring. Separate wiring for each sensor allows for independent control and monitoring of the sensors which enhances the flexibility and functionality of the system, as it can detect multiple levels simultaneously without interference or cross-talk between signals. The use of separate wiring also provides redundancy, ensuring that the failure of one sensor or wire does not impact the operation of the other.

According to an example embodiment, the probe arrangement further comprises a control unit configured to control each of the first and second vibrating fork level sensors individually. A dedicated control unit with individual control of sensors allows for detailed management of the sensors, such as selecting specific sensors for operation, adjusting settings, and/or separate signal processing.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing example embodiments of the invention, wherein:
Fig. 1 schematically illustrates a vibrating fork level sensor probe arrangement according to an example embodiment;
Fig. 2 schematically illustrates a vibrating fork level sensor probe arrangement in a tank according to an example embodiment;
Fig. 3 schematically illustrates a vibrating fork level sensor probe arrangement according to an example embodiment;
Fig. 4 schematically illustrates a vibrating fork level sensor probe arrangement according to an example embodiment;
Fig. 5 schematically illustrates a vibrating fork level sensor probe arrangement according to an example embodiment;
Fig. 6 schematically illustrates a vibrating fork level sensor probe arrangement according to an example embodiment arranged in a tank;
Fig. 7 is a graph outlining frequency properties of a vibrating fork level sensor according to an example embodiment.

### Detailed Description of Example Embodiments

In the present detailed description, various embodiments of the vibrating fork level sensor probe arrangement according to the present invention are mainly described with reference to a probe arrangement installed in a tank located on land. However, the described system and method is suitable for use also in other areas such as in marine applications.

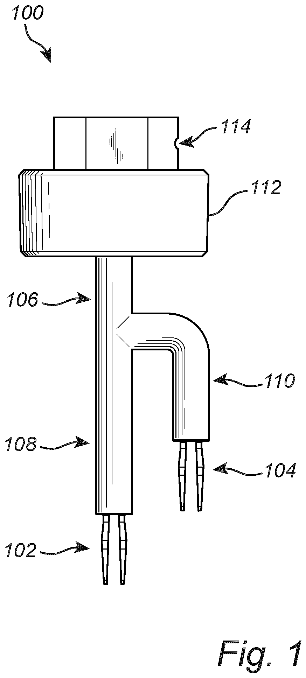

Fig. 1 schematically illustrates a vibrating fork level sensor probe arrangement 100 for a tank according to an example embodiment. The probe arrangement comprises a first vibrating fork level sensor 102, a second vibrating fork level sensor 104, and a pipe 106 configured to hold the first vibrating fork level sensor 102 in a first position and to hold the second vibrating fork level sensor 104 in a second position at a predetermined distance from the first vibrating fork level sensor 102. Each of the first and second vibrating fork level sensor 102, 104 is configured to determine a location of an interface of a material in the tank. In the described probe arrangement 100, it is thereby possible to control the distance between the first and second vibrating fork level sensor with high accuracy which in turn makes it possible to not only determine a level of a material, but also to characterize an interface between two materials with high precision.

In an example embodiment, the first vibrating fork level sensor 102 is arranged to operate at a first frequency and the second vibrating fork level sensor 104 are arranged to operate at second frequency, different from the first frequency. The first and second frequencies may be two different frequencies around 1400 Hz which is a known operating frequency for vibrating fork level sensors. It is also possible to configure the two sensors 102, 104 with a larger separation in frequency, for example with the first vibrating fork level sensor 102 operating at 600 Hz and the second vibrating fork level sensor 104 operating at 1500 Hz. A larger separation in frequency reduces the risk of interference between the two sensors. Moreover, the behavior of the sensor when immersed in a material may be frequency dependent, which in turn could lead to possibilities for characterization of material properties in a sensor arrangement using two sensors operating at different frequencies.

The pipe 106 is illustrated as a homogeneous tubular channel which is formed in a single piece. Moreover, the illustrated pipe 106 is a forked pipe comprising a first branch 108 holding the first vibrating fork level sensor 102 and a second branch 110 holding the second vibrating fork level sensor 104. The pipe 106 may be a hollow tube with cables running approximately in the middle of the pipe to each of the first and second sensor 102, 104. Moreover, in the illustrated example, the forks of the first vibrating fork level sensor 102 have the same alignment as the forks of the second vibrating fork level sensor 104, i.e. both of the first and second sensors 102 are vertically aligned. It is however not required that all sensors of a probe arrangement have the same alignment. An advantage of providing a probe arrangement with all sensors having the same alignment is that the overall diameter of the probe arrangement as a whole can be minimized.

By means of the described probe arrangement, it is possible to provide a vibrating fork level sensor arrangement with a well-defined and predetermined distance between sensors, thereby making it possible to accurately characterize interfaces as will be described in the following. The described probe arrangement 100 can also be used to provide redundancy in applications where level measurement is critical. Two or more vibration fork level sensors can thereby be arranged at the same level while still only using one tank connection.

The probe arrangement 100 further comprises a sensor body 112 configured to be arranged at an interface between an inside and an outside of a tank, where the pipe 106 is connected to the sensor body 112. The sensor body 112 can be considered to include both parts to be arranged on the inside and on the outside of the tank in a tank through-opening. The use of a single sensor body 112 for a plurality of sensors enables closer positioning of the sensor compared to if individual sensors are used. Moreover, installation is simplified and the occupied volume within the tank can be reduced compared to multiple individual sensors.

The sensor body 112 further comprises an alignment mark 114, here illustrated in the form of a notch 114 to facilitate correct alignment of the probe arrangement during installation. The sensor body may in some embodiments be an entirely metal part with sensor electronics arranged in an encapsulation outside of the tank. It is however also possible to arrange some sensing circuitry within the sensor body. The vibrating fork level sensors 102, 104 typically comprise crystals for driving the vibration forks, but they may also comprise isolation circuitry, and in some applications additional sensing circuitry may be arranged in the vibrating fork level sensor.

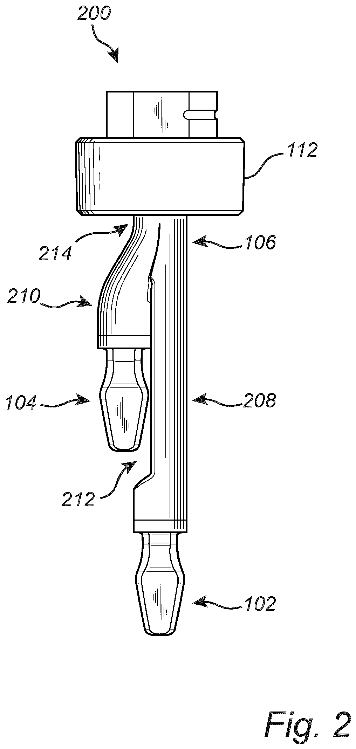

Fig. 2 schematically illustrates an example embodiment of the probe arrangement 200 where the first vibrating fork level sensor 102 is connected to a first pipe section 208 and the second vibrating fork level sensor 104 is connected to a second pipe section 210 parallel with the first pipe section 208. The first pipe section 208 is longer than the second pipe section 210 and the first pipe section 208 comprises a recessed portion 212, where the second vibrating fork level sensor is 104 at least partially arranged in the recessed portion 212 of the first pipe section 208. The recessed portion 212 can be formed by making the cross section of a portion of the pipe as a semicircle instead of a circle, but other configurations are also possible.

In the configuration illustrated in Fig. 2, the total diameter of the probe arrangement is reduced and the total diameter of the pipe and sensors, i.e. the "footprint", can be made to be smaller than the diameter of the sensor body 112. Both of the first vibrating fork level sensor 102 and the second vibrating fork level sensor 104 is thereby arranged within the diameter of the sensor body 112. Moreover, the connection 214 between the pipe 106 and the sensor body 112 may be centrally aligned to facilitate manufacturing, where the pipe 106 may be welded to the sensor body 112.

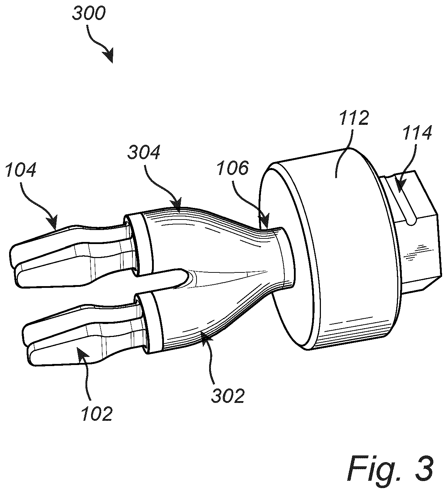

Fig. 3 schematically illustrates an example embodiment of the probe arrangement 300 where the first and second vibrating fork level sensor 102, 104 are arranged in parallel and on a corresponding first and second pipe branch 302, 304 of equal length. In an implementation where the probe arrangement 300 is arranged horizontally in a tank, the vertical distance between the first and second vibrating fork level sensor 102, 104 can be carefully controlled by controlling the rotational alignment of the sensor body 112. In the illustrated example, the preferred alignment is predefined during manufacturing and the alignment mark 114 of the sensor body 112 ensures correct alignment during installation in a tank. As described above in relation to Fig. 2, it is also possible to provide a probe arrangement where the pipe 106 is rotatable in relation to the sensor body 112 and/or where the sensors 102, 104 are rotatable in relation to the respective pipe branch 302, 304. For the described vibrating fork level sensor probe arrangement, it is possible to achieve the distance between the two sensors 102, 104 with an accuracy of approximately ±1-2 mm.

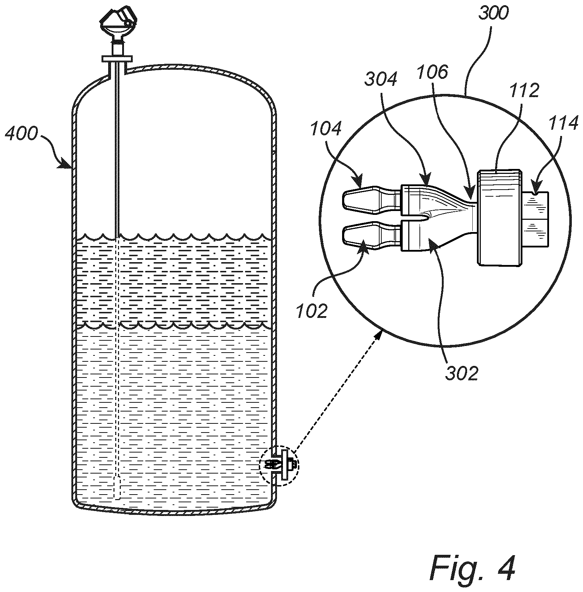

Fig. 4 schematically illustrates a tank 400 comprising the probe arrangement 300 of Fig. 3 installed horizontally in a sidewall of the tank 400. By controlling the rotational alignment of the probe arrangement 300, the vertical distance between the two vibrating fork level sensors 102, 104 can be carefully controlled. The rotational alignment can for example be set at the factory during manufacturing in which case an alignment mark such as the illustrated notch 114 can be used during installation to ensure correct alignment. It is also possible to provide a probe arrangement where the rotational alignment of the sensor(s) and/or of the sensor body can be controlled and adjusted during installation. Each of the first and second sensor 102, 104 can thus be controllably rotatable in relation to the pipe 106, and the pipe 106 can be controllably rotatable in relation to the sensor body, enabling relative rotational alignment of the respective first and second vibrating fork level sensor 102, 104.

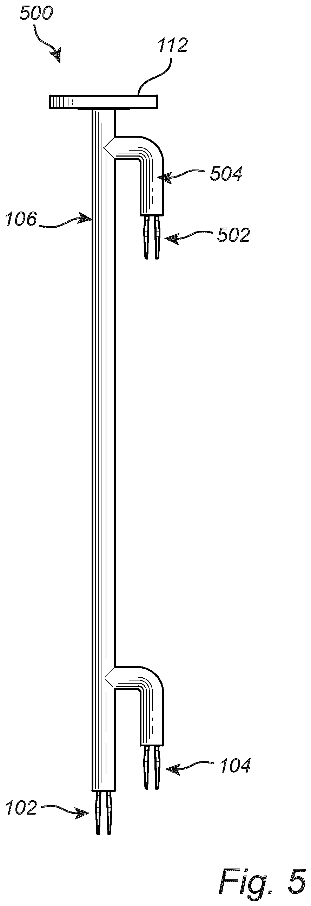

Fig. 5, schematically illustrates an example embodiment of the vibrating fork level sensor probe arrangement 500 with a first and second lower vibrating fork level sensor 102, 104 and with a third upper vibrating fork level sensor 502 attached to a third pipe section 504.

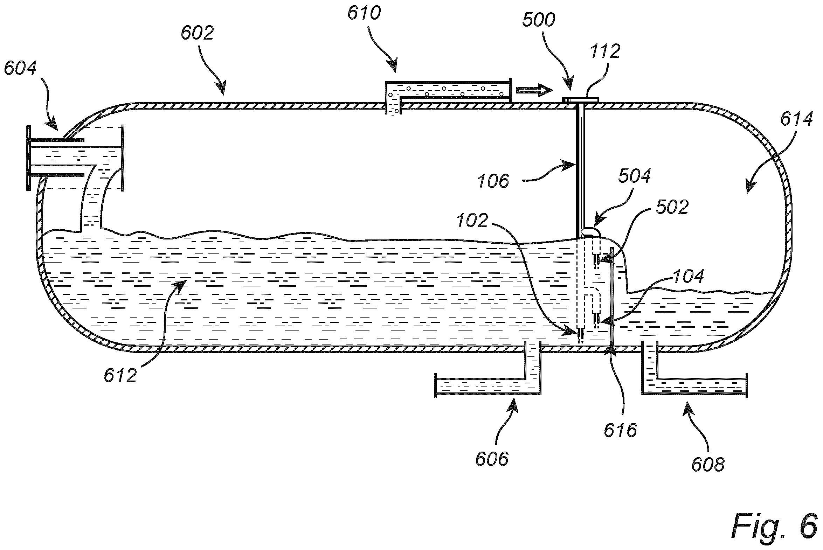

Fig. 6 schematically illustrates an example embodiment of the vibrating fork level sensor probe arrangement 500 arranged in a separation tank 602 for separating oil from water.

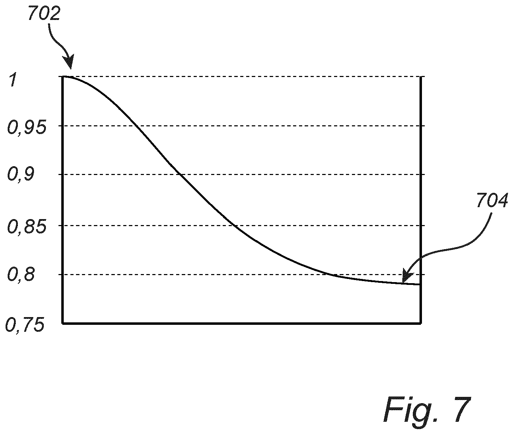

Fig. 7 schematically illustrates a typical behavior of a vibrating fork when immersed in a fluid, where the x-axis illustrates the immersion depth in a fluid and the y-axis illustrates the relative frequency drop when the vibrating fork is immersed in a fluid. In the first portion 702 of the graph, the fork is in the air and this frequency can be referred to as the "dry frequency". In the second portion 704 of the graph, the fork is fully immersed in a liquid and the frequency of the fork can be referred to as the "wet frequency". For immersion in water, the wet frequency of an example implementation of the vibrating fork level sensor is approximately 79% of the dry frequency. In the case of a lighter fluid the relative frequency drop is lower than the one for water using the same fork. Taking gasoline as an example, having a density of 730 kg/m3, the wet frequency is approximately 81.3% of the dry frequency. It is thereby possible to not only detect a level but also to determine which material is at the detected level using the described sensors.

The example behavior illustrated in Fig. 7 and described above is based on one configuration of a vibrating fork. Changing the size and shape of the paddle area of the forks will change the frequency drop in the respective media. Thus, the frequency drop in between the different media can be changed if needed.

The separator tank 602 has an inlet, a water outlet 606, an oil outlet 608 and a gas outlet 610. The interior of the separator tank 602 consists of at least a first and a second chamber 612, 614 separated by a separating wall 616, where the separation wall only reaches part of the way from the bottom of the tank 602. The separator tank 602 further comprises a vibrating fork level sensor probe arrangement 500 as illustrated in Fig. 5, with a first and second lower vibrating fork level sensor 102, 104 and a third upper vibrating fork level sensor 502.

During operation of the separation tank, an emulsion of water and oil is fed into the first chamber 612 through the inlet 604 where the emulsion splits up into fractions. The lighter fraction, usually oil, will then float over the heavier fraction, typically water. The lighter fraction will then be moved to the second chamber 614 while controlling the level of the location of the heavier fraction. It is thereby important to keep control over the different levels in the first chamber 612 to avoid having portions of the heavier fraction, i.e. water, in the second chamber 614 and to avoid have portions of the lighter fraction, i.e. oil, in the water at the water outlet 606. Minor traces of the differencing fraction could remain in its respective base fraction but shall be kept at a minimum and will be considered as contamination.

The separation process is maintained by draining the first chamber of the heavier fraction from below through the water outlet 606 and the lighter fraction from the top over the separation wall 616. The probe arrangement according to various described embodiments will help to control the drainage of the first chamber 612 by indicating a density of the material using the frequency drop on both lower vibrating fork sensors 102, 104 for the different fractions. The frequency drop of the individual fork sensors can then be used to control the behavior of the switching pumps and/or valves of the water outlet 606 and the oil outlet 608.

When both sensors 102, 104 are indicating the heavier fraction, the heaver fluid can be drained from below. When the upper vibrating sensor 104 frequency increases it is indicative of that there is a lighter fraction on top of the heavier fraction, and the drainage should stop to avoid parts of the lighter fraction being drained together with the heavier fraction. The lighter fraction may also be a gas, for example a mixture of air and gases from the lighter fraction.

To control the upper level of the first chamber 612 from pushing the heavier fraction into the second chamber 614, the vibrating fork level sensor probe arrangement 500 comprises a third vibrating fork level sensor 502 with frequency recognition capabilities at an upper position close to the upper drain, i.e. close to the upper portion of the separating wall 616.

This third vibrating fork level sensor 502 will also help to provide a higher accuracy, determining the nature of the lighter fraction detected by the upper fork level sensor 502. When the third vibrating fork level sensor 502 shows a frequency drop indicative of the heavier fluid, the drainage from the oil outlet 608 needs to be increased or the inlet 604 needs to be restricted or closed so that no portion of the heavier fraction enters the second chamber 614.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A vibrating fork level sensor probe arrangement (100) for a tank comprising:
a first vibrating fork level sensor (102);
a second vibrating fork level sensor (104); and
a pipe (106) configured to hold the first vibrating fork level sensor in a first position and to hold the second vibrating fork level sensor in a second position at a predetermined distance from the first vibrating fork level sensor, wherein the first and second vibrating fork level sensors are configured to determine a location of an interface of a material in the tank.

2. The probe arrangement according to claim 1, wherein the first vibrating fork level sensor is arranged to operate at first frequency and the second vibrating fork level sensor is arranged to operate at second frequency, different from the first frequency.

3. The probe arrangement according to any one of the preceding claims, wherein the pipe forms a homogeneous tubular channel

4. The probe arrangement according to any one of the preceding claims, wherein the pipe is formed in a single piece.

5. The probe arrangement according to any one of the preceding claims, wherein the pipe is a forked pipe comprising a first branch (108) holding the first vibrating fork level sensor and a second branch (110) holding the second vibrating fork level sensor.

6. The probe arrangement according to any one of the preceding claims, further comprising a sensor body (112) configured to be arranged at an interface between an inside and an outside of a tank, wherein the pipe is connected to the sensor body.

7. The probe arrangement according to claim 6, wherein the sensor body has a first diameter, and where both of the first vibrating fork level sensor and the second vibrating fork level sensor are arranged within said first diameter.

8. The probe arrangement according to claim 6 or 7, wherein the pipe is rotatably connected to the sensor body, allowing rotational adjustment of the pipe in relation to the sensor body.

9. The probe arrangement according to claim 8, wherein the probe arrangement is configured to be installed horizontally in a tank, and wherein the pipe comprises two parallel branches holding the first and second vibrating fork level sensor such that a vertical distance between the first and second vibrating fork level sensor is controllable by rotation of the pipe in relation to the sensor body.

10. The probe arrangement according to claim 9, wherein each of the first vibrating fork level sensor and the second vibrating fork level sensor is rotatably connected to the pipe to enable relative rotational alignment of the respective first and second vibrating fork level sensor.

11. The probe arrangement according to any one of the preceding claims, wherein the first vibrating fork level sensor is configured to be arranged at a predefined vertical distance from the second vibrating fork level sensor when the probe arrangement is mounted in a tank.

12. The probe arrangement according to any one of the preceding claims, wherein the probe arrangement comprises an alignment mark (114) configured to define a rotational alignment of the probe arrangement when the probe arrangement is arranged horizontally in a tank.

13. The probe arrangement according to any one of the preceding claims, wherein the first vibrating fork level sensor is connected to a first pipe section and the second vibrating fork level sensor is connected to a second pipe section parallel with the first pipe section, wherein:
the first pipe section is longer than the second pipe section;
the first pipe section comprises a recessed portion; and
the second vibrating fork level sensor is at least partially arranged in the recessed portion of the first pipe section.

14. The probe arrangement according to any one of the preceding claims, wherein each of the first and second vibrating fork level sensor is connected to a sensor control unit using separate wiring.

15. The probe arrangement according to any one of the preceding claims, further comprising a control unit configured to control each of the first and second vibrating fork level sensors individually.
